# EUROPÄISCHE PATENTSCHRIFT

(11) **EP 0 739 504 B1**
(45) Veröffentlichungstag und Bekanntmachung des Hinweises auf die Patenterteilung: **29.04.1998**
(21) Anmeldenummer: 94911135.5
(22) Anmeldetag: 09.03.1994
(51) Int. Cl.: G05D 16/06

(54) **GAS-DRUCKREGELGERÄT**
GAS-PRESSURE CONTROLLER
REGULATEUR DE PRESSION DE GAZ

(30) Priorität: 13.04.1993 DE 4311826
(43) Veröffentlichungstag der Anmeldung: 30.10.1996
(73) Patentinhaber: ELSTER PRODUKTION GMBH, D-55252 Mainz-Kastel (DE)
(72) Erfinder: KETTNER, Thomas, D-65623 Netzbach (DE); WELKER, Georg, D-73463 Westerhofen (DE)
(74) Vertreter: Harlacher, Mechthild
(86) Internationale Anmeldenummer: EP9400723
(87) Internationale Veröffentlichungsnummer: WO9424620

(56) Entgegenhaltungen:
- DE-A- 1 600 733
- DE-C- 1 017 108
- FR-A- 1 023 838
- FR-A- 2 071 888
- FR-A- 2 447 573
- GB-A- 479 042

## Beschreibung

Die Erfindung betrifft ein Gas-Druckregelgerät mit einem Gehäuse, das einen Eingang und einen Ausgang aufweist, mit einem zwischen Eingang und Ausgang angeordneten Ventildurchgang, der ausgangsseitig einen Ventilsitz aufweist und der von einem Ventilteller beherrscht wird, sowie mit einer Ventilspindel, die den Ventilteller mit einer Arbeitsmembran verbindet.

FR-A-1 023 838 zeigt ein solches Gas-Druckregelgerät.

Derartige Gas-Druckregler werden im Niederdruck- und im Mitteldruckbereich eingesetzt.

Bei Einsatz im Mitteldruckbereich (ab 100 mbar bis 4 bar) ist es erforderlich, dem Druckregelgerät ein Sicherheitsabsperrventil vorzuschalten. Das Sicherheitsabsperrventil verschließt selbsttätig die Gaszufuhr zum Druckregelgerät, wenn der Druck im Ausgang des Druckregelgerätes infolge eines Gasmangels einen Minimaldruck unterschreitet (unterer Abschaltpunkt) oder wenn der Ausgangsdruck einen maximalen Druck überschreitet (oberer Abschaltpunkt).

Nachteilig ist, daß zur Wiederinbetriebnahme ein manuelles Entriegeln des Sicherheitsabsperrventiles notwendig ist. Dies ist besonders nachteilig bei Gasmangel, weil dieser häufiger auftritt als ein zu hoher Druck im Ausgang.

Demgemäß besteht die Aufgabe der Erfindung darin, ein Gas-Druckregelgerät zu schaffen, das die Gaszufuhr selbsttätig absperrt, wenn der Ausgangsdruck infolge eines Gasmangels einen Minimaldruck unterschreitet und daß selbsttätig die Gaszufuhr frei gibt, wenn der Minimaldruck wieder überschritten wird.

Zur Lösung dieser Aufgabe ist das Gas-Druckregelgerät nach der Erfindung dadurch gekennzeichnet, daß eingangsseitig ein Schließteller axial beweglich mit der Ventilspindel verbunden ist,
daß der Schließteller von einem elastischen Bauteil in Öffnungsrichtung gedrückt wird und den Ventildurchgang freigibt, wenn der Druck im Ausgang oberhalb eines Minimaldruckes liegt und
daß der Schließteller den einen Schließtellersitz aufweisenden Ventildurchgang verschließt, wenn der Druck im Ausgang unterhalb des Minimaldruckes sinkt, wobei eine Kleinstdurchflußöffnung vorhanden ist.

Geltende Sicherheitsvorschriften fordern, daß eine Wiederinbetriebnahme des Druckreglers nur dann erfolgen darf, wenn die nachgeschalteten Verbraucher abgeschaltet sind.
Diese Forderung wird von dem erfindungsgemäßen Gas-Druckregler eingehalten.

Die Sicherung gegen Gasmangel funktioniert wie folgt:

Beim Absinken des Eingangsdruckes sinkt ab einem bestimmten Druck auch der Ausgangsdruck und der Ventilteller öffnet mehr und mehr den Ventildurchgang bis schließlich der Schließteller den Ventildurchgang verschließt.

Das Überströmen einer Kleinstmenge wird durch die Kleinstdurchflußöffnung ermöglicht. Steigt der Eingangsdruck wieder an, strömt diese Kleinstdurchfluß in das nachgeschaltete Leitungssystem. Sind alle dem Druckregelgerät nachgeschalteten Verbraucher geschlossen. kann sich der Ausgangsdruck aufbauen und der Ventilteller und die Ventilspindel heben sich während der Schließteller vom Eingangsdruck in Schließstellung gehalten wird. Erst wenn der Ventilteller in Schließstellung geht, gleicht sich der Druck über und unter dem Schließteller aus und das elastische Bauteil drückt den Schließteller nach oben.

Ein besonderer Vorteil liegt darin, daß ein schlagartiges Übergehen des Eingangsdruckes auf die Ausgangsseite nicht möglich ist. Dadurch wird die Gefahr vermieden, daß der Ausgangsdruck den Maximaldruck kurzzeitig überschreitet, so daß das Sicherheitsabsperrventil im oberen Abschaltpunkt schaltet und die Gaszufuhr absperrt.

Die Durchflußleistung des Gas-Druckregelgerät wird durch den Schließteller nicht wesentlich beeinträchtigt.

Vorzugsweise weist die Ventilspindel einen Anschlag für den Schließteller auf. Diese Lösung ist konstruktiv besonders einfach.

Eine vorteilhafte Ausführungsform ist dadurch gekennzeichnet, daß die Kleinstdurchflußöffnung als Düse im Schließteller ausgebildet ist. Auf diese Weise kann der Kleinstdurchfluß einfach und genau dimensioniert werden. Eine Durchflußmenge von 30 Liter pro Stunde soll nicht überschritten werden.

Vorteilhafterweise ist zwischen dem Schließteller und der Ventilspindel eine Führungshülse angeordnet.

Konstruktiv besonders einfach ist es, wenn das elastische Bauteil auf dem Ventilteller aufliegt.

Vorzugsweise ist das elastische Bauteil als vorgespannte Druckfeder ausgebildet.

Die Erfindung wird im folgenden anhand einer bevorzugten Ausführungsform des erfindungsgemäßen Gas-Druckregelgerätes im Zusammenhang mit der Zeichnung näher erläutert. Die Zeichnung zeigt in:
Fig. 1 einen Längsschnitt durch ein Gas-Druckregelgerät während eines Regelvorganges;
Fig. 2 einen Längsschnitt durch ein Gas-Druckregelgerat bei der Wiederinbetriebnahme.

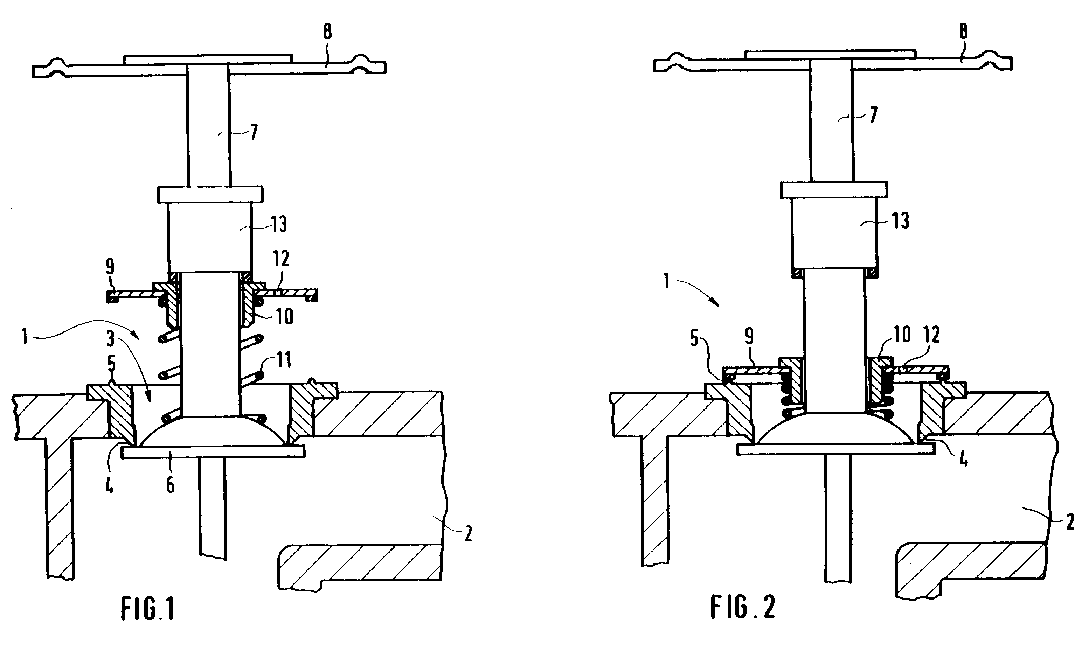

Das Druckregelgerät nach Fig. 1 und 2 weist ein nicht dargestelltes Gehäuse mit einem Eingang 1 und einem Ausgang 2 auf. Zwischen Eingang 1 und Ausgang 2 befindet sich ein Ventildurchgang 3, der ausgangsseitig einen Ventilsitz 4 und eingangsseitig einen Schließtellersitz 5 aufweist. Der Ventildurchgang wird von einem Ventilteller 6 beherrscht. der über eine Ventilspindel 7 mit einer Arbeitsmembran 8 verbunden ist.

Eingangsseitig befindet sich auf der Ventilspindel 7 ein Schließteller 9 der mit Hilfe einer Führungshülse 10 mit der Ventilspindel 7 axial beweglich verbunden ist. Zwischen Schließteller 9 und Ventilteller 6 befindet sich ist eine vorgespannte Druckfeder 11, die auf dem Ventilteller 6 aufliegt. Der Schließteller 9 weist eine Düse 12 für einen Kleinstdurchfluß auf.

In Fig. 1 ist dargestellt, daß die Druckfeder 11 den Schließteller 8 gegen einen oberen Anschlag 13 an der Ventilspindel 6 drückt. Im entspannten Zustand muß die Vorspannung der Druckfeder 11 größer sein als das Eigengewicht des Schließtellers 9. Während des normalen Regelvorganges wird der Schließteller im oberen Anschlag 13 gehalten, wobei die Durchflußleistung des Druckreglers durch den Schließteller kaum beeinträchtigt wird.

Bei Gasmangel geschieht folgendes: Beim Absinken des Eingangsdruckes sinkt ab einem gewissen Druck auch der Ausgangsdruck. Der Ventilteller 6 öffnet mehr und mehr bis schließlich der Schließteller 9 auf seinem Sitz aufliegt 5 und den Ventildurchgang 3 absperrt.

In Fig. 2 ist die Wiederinbetriebnahme dargestellt. Ein dem Druckregelgerät nachgeschalteter nicht dargestellter Verbraucher ist geschlossen. Wenn die Eingangsseite mit Druck beaufschlagt wird, strömt über die kleine Düse 12 ein Kleinstdurchfluß von maximal 30 Liter pro Stunde in eine nicht dargestellte Leitung zum Verbraucher. Da dieser abgesperrt ist, kann sich langsam der Ausgangsdruck aufbauen. Die Ventilspindel 7 hebt sich, während der Schließteller 9 vom Eingangsdruck in Schließstellung gehalten wird und sich die Druckfeder 11 spannt. Erst wenn der Ventilteller 6 in Schließstellung in seinem Sitz 4 liegt, gleicht sich der Druck unter und über dem Schließteller 9 aus und die Druckfeder 11 drückt den Schließteller 9 nach oben. Der Druckregler ist jetzt wieder in Betrieb.

## Patentansprüche

1. Gas-Druckregelgerät mit einem Gehäuse, das einen Eingang (1) und einen Ausgang (2) aufweist, mit einem zwischen Eingang (1) und Ausgang (2) angeordneten Ventildurchgang (3), der ausgangsseitig einen Ventilsitz (4) aufweist und der von einem Ventilteller (6) beherrscht wird, sowie mit einer Ventilspindel (7), die den Ventilteller (6) mit einer Arbeitsmembran (8) verbindet,
dadurch gekennzeichnet,
daß eingangsseitig ein Schließteller (9) axial beweglich mit der Ventilspindel (7) verbunden ist,
daß der Schließteller (9) von einem elastischen Bauteil (11) in Öffnungsrichtung gedrückt wird und den Ventildurchgang (3) freigibt, wenn der Druck im Ausgang (2) oberhalb eines Minimaldruckes liegt und
daß der Schließteller (9) den einen Schließtellersitz (5) aufweisenden Ventildurchgang (3) verschließt, wenn der Druck im Ausgang unterhalb des Minimaldruckes sinkt, wobei eine Kleinstdurchflußöffnung (12) vorhanden ist.

2. Gas-Druckregelgerät nach Anspruch 1,
dadurch gekennzeichnet,
daß die Ventilspindel (7) einen Anschlag (13) für den Schließteller (9) aufweist.

3. Gas-Druckregelgerät nach Anspruch 1 oder 2,
dadurch gekennzeichnet.
daß die Kleindurchflußöffnung (12) als Düse im Schließteller (9) ausgebildet ist.

4. Gas-Druckregelgerät nach einem der Ansprüche 1 bis 3,
dadurch gekennzeichnet,
daß zwischen dem Schließteller (9) und der Ventilspindel eine Führungshülse (10) angeordnet ist.

5. Gas-Druckregelgerät nach einem der Ansprüche 1 bis 4,
dadurch gekennzeichnet,
daß das elastische Bauteil (11) auf dem Ventilteller (6) aufliegt.

6. Gas-Druckregelgerät nach einem der Ansprüche 1 bis 5,
dadurch gekennzeichnet.
daß das elastische Bauteil (11) als vorgespannte Druckfeder ausgebildet ist.

## Claims

1. Gas-pressure controller with a body which has an inlet (1 ) and an outlet (2), with a flow channel (3) arranged between the inlet (1 ) and the outlet (2), said flow channel having a valve seat (4) on the outlet side and being governed by a valve disk (6), as well as with a valve spindle (7) connecting the valve disk (6) to a diaphragm (8),
characterised in that,
on the inlet side an obturator disk (9) is connected to the valve spindle (7) so that it can move axially,
that the obturator disk (9) is pressed by an elastic component (11) in the "open" direction and opens to give a flow channel (3) when the outlet pressure (2) is above a minimum value and
that the obturator disk (9) closes the flow channel (3) which is provided with an obturator disk seat (5) when the outlet pressure falls below the minimum value, leaving an extremely small flow aperture (12).

2. A gas-pressure controller according to claim 1,
characterised in that,
the valve spindle (7) is provided with a stop (13) for the obturator disk (9).

3. A gas-pressure controller according to claim 1 or 2,
characterised in that,
the extremely small flow aperture (12) is designed in the form of a nozzle in the obturator disk (9).

4. A gas-pressure controller according to any one of claims 1 through 3,
characterised in that,
a guide sleeve (10) is arranged between the obturator disk (9) and the valve spindle (7).

5. A gas-pressure controller according to any one of claims 1 through 4,
characterised in that,
the elastic component (11) rests on the valve disk (6).

6. A gas-pressure controller according to any one of claims 1 through 5,
characterised in that,
the elastic component (11) is designed in the form of a pretensioned pressure spring.

## Revendications

1. Régulateur de pression de gaz avec un carter présentant une entrée (1) et une sortie (2), un passage de soupape (3) disposé entre l'entrée (1) et la sortie (2), présentant côté sortie une siège de soupape (4) et étant dominé par une tête de soupape (6), et une tige de soupape (7) reliant la tête de soupape (6) à une membrane de travail (8),
caractérisé par le fait
que, côté entrée, un disque de fermeture (9) est relié axialement mobile à la tige de soupape (7),
que le disque de fermeture (9) est pressé en direction d'ouverture par un élément élastique (11), libérant le passage de soupape (3) quand la pression à la sortie (2) est supérieure à une pression minimale; et
que le disque de fermeture (9) obture le passage de soupape (3) présentant une siège de disque de fermeture (5) quand la pression à la sortie tombe en dessous de la pression minimale, par quoi est présente une ouverture de passage minimal (12).

2. Régulateur de pression de gaz selon la revendication 1,
caractérisé par le fait
que la tige de soupape (7) présente une butée (13) pour le disque de fermeture (9).

3. Régulateur de pression de gaz selon l'une des revendications 1 ou 2,
caractérisé par le fait
que l'ouverture de passage minimal (12) est conçue sous forme d'injecteur dans le disque de fermeture (9).

4. Régulateur de pression de gaz selon l'une des revendications 1 à 3,
caractérisé par le fait
qu'une douille de guidage (10) est disposée entre le disque de fermeture (9) et la tige de soupape.

5. Régulateur de pression de gaz selon l'une des revendications 1 à 4,
caractérisé par le fait
que l'élément élastique (11) repose sur la tête de soupape (6).

6. Régulateur de pression de gaz selon l'une des revendications 1 à 5,
caractérisé par le fait
que l'élément élastique (11) est conçu sous forme de ressort de pression prétendu.
